Europäisches Patentamt

European Patent Office

Office européen des brevets

(11) Numéro de publication : **0 424 268 B1**

# FASCICULE DE BREVET EUROPEEN

(45) Date de publication du fascicule du brevet :
28.07.93 Bulletin 93/30

(51) Int. Cl.⁵ : **G01B 5/00**, G01B 5/20,
G01B 3/46, G01B 11/06

(21) Numéro de dépôt : 90402939.4

(22) Date de dépôt : 19.10.90

(54) **Procédé et dispositif de contrôle du montage des demi-cônes sur la queue de soupape.**

(30) Priorité : 20.10.89 FR 8913738

(43) Date de publication de la demande :
24.04.91 Bulletin 91/17

(45) Mention de la délivrance du brevet :
28.07.93 Bulletin 93/30

(84) Etats contractants désignés :
BE DE ES GB IT

(56) Documents cités :
EP-A- 0 315 308
WO-A-86/01885
US-A- 3 811 194

(73) Titulaire : **RENAULT AUTOMATION**
**8/10 avenue Emile Zola**
**F-92109 Boulogne-Billancourt (FR)**

(72) Inventeur : **Thurier, Yvan**
**6, rue des Charmes**
**F-94320 Thiais (FR)**

(74) Mandataire : **Saint Martin, René**
**Régie Nationale des Usines Renault SA, Sce**
**0267, 860, Quai de Stalingrad**
**F-92109 Boulogne Billancourt (FR)**

## Description

La présente invention concerne un dispositif de contrôle du montage des demi-cônes sur la queue de soupape.

Dans un moteur à explosions muni de soupapes d'admission et d'échappement avec un mouvement d'ouverture commandé à partir d'un arbre à cames et avec un mouvement de fermeture commandé par un ressort, celui-ci prend appui sur une coupelle de ressort solidaire de la queue de la soupape par l'intermédiaire de deux demi-cônes. Ces demi-cônes ont une forme de demi-bague avec un alésage cylindrique pour s'ajuster autour de la queue de la soupape et avec une collerette faisant saillie dans cet alésage et qui s'emboîtent dans une gorge aménagée sur la queue de la soupape. Lorsque ces demi-cônes sont emboîtés correctement sur la queue de la soupape ils présentent une face extérieure tronconique dont le plus grand diamètre est positionné vers l'extrémité de la queue de la soupape. La coupelle d'appui du ressort s'emboîte autour des demi-cônes grâce à son alésage de conicité identique à celle des demi-cônes. On obtient alors une liaison positive en translation dans le sens de l'effort du ressort.

La recherche de la qualité totale exige un contrôle rigoureux et fiable de chacune des phases d'assemblage lors du montage automatique des composants mécaniques qui seront ensuite difficilement visibles par contrôle visuel.

L'invention propose un procédé et un dispositif permettant le contrôle de l'assemblage correct des demi-cônes sur la queue de la soupape ainsi que le montage de la coupelle d'appui du ressort lorsque ces opérations sont effectuées automatiquement.

Les dessins annexés illustrent l'invention :
- La figure 1 représente une méthode de contrôle.
- La figure 2 représente une autre méthode de contrôle.
- La figure 3 représente une coupe générale du dispositif.
- La figure 4 représente une section ZZ de la figure 3.
- La figure 5 représente une vue suivant F de la figure 3.
- La figure 6 représente une coupe YY de la figure 5.

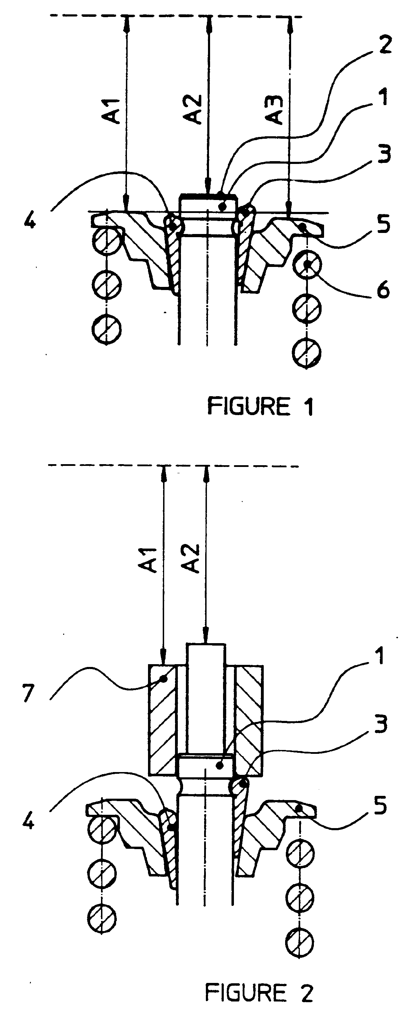

La figure 1 illustre un procédé de contrôle à l'aide d'un palpeur sans contact comme un palpeur à triangulation optique.

Le contrôle consiste à mesurer la distance séparant la face extrême 2 de la queue de la soupape 1 avec la face supérieure de la coupelle 5 d'appui du ressort 6. Sur cet exemple, l'extrémité du ressort 6 n'étant pas bien perpendiculaire à l'axe de celui-ci, il induit un mauvais positionnement du demi-cône 3, bien que l'ensemble soit apte au fonctionnement. Pour quantifier le défaut, il faut prévoir deux mesures $A_1$ et $A_3$, sur la face supérieure de la coupelle 5 pour déterminer son inclinaison et sa position en combinaison avec la mesure $A_2$ faite sur la face extrême 2 de la queue de la soupape 1. Ce procédé qui exige deux mesures sur la face de la coupelle 5, pour déterminer le plan, n'est pas satisfaisant car, comme on l'a vu, la liaison en translation de la coupelle 5 avec la queue de soupape 1 est correcte même si le ressort 6 décale légèrement la coupelle 5. Il faut alors augmenter le seuil de tolérance pour accepter ce défaut ; mais dans ce cas, un demi-cône qui ne serait pas exactement engagé à sa place n'est pas détecté par ce type de mesure.

On peut envisager le palpage direct sur les deux demi-cônes 3 et 4 mais il faudrait palper en 4 points car le diamètre du spot est plus petit que le jeu entre les demi-cônes.

On peut également palper la face d'une bague intercalaire 7 qui s'engage autour de la queue de la soupape 1 et qui prend appui sur la face supérieure des deux demi-cônes 3, 4. Cette solution n'est pas satisfaisante car un des deux demi-cônes 3 ou 4, peut-être mal monté ou absent sans interdire le maintien en translation de la coupelle 5 d'appui de ressort 6. La mesure ne verrait pas le défaut qui provoquerait une panne grave après un temps de fonctionnement assez court du moteur.

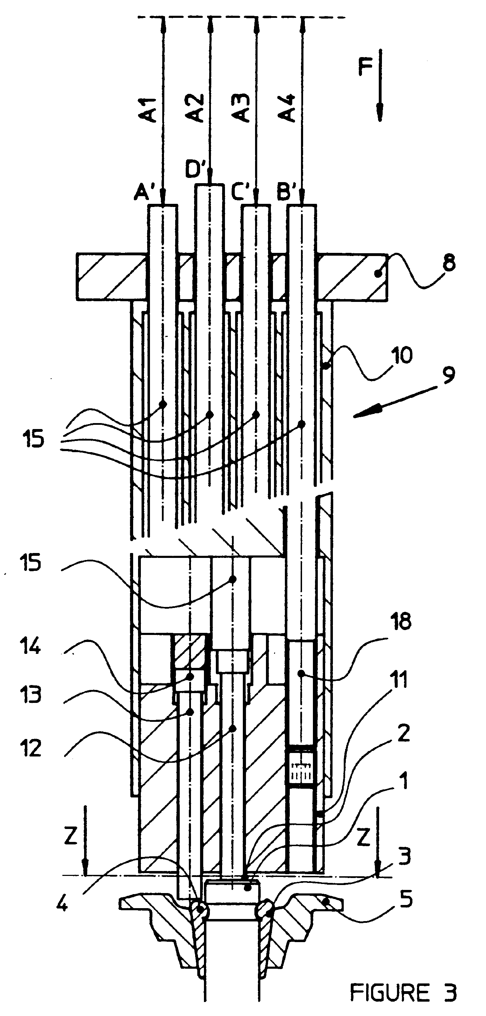

La figure 3 représente le dispositif de contrôle suivant l'invention.

La culasse, qui n'est pas représentée, est positionnée géométriquement sur la machine de contrôle.

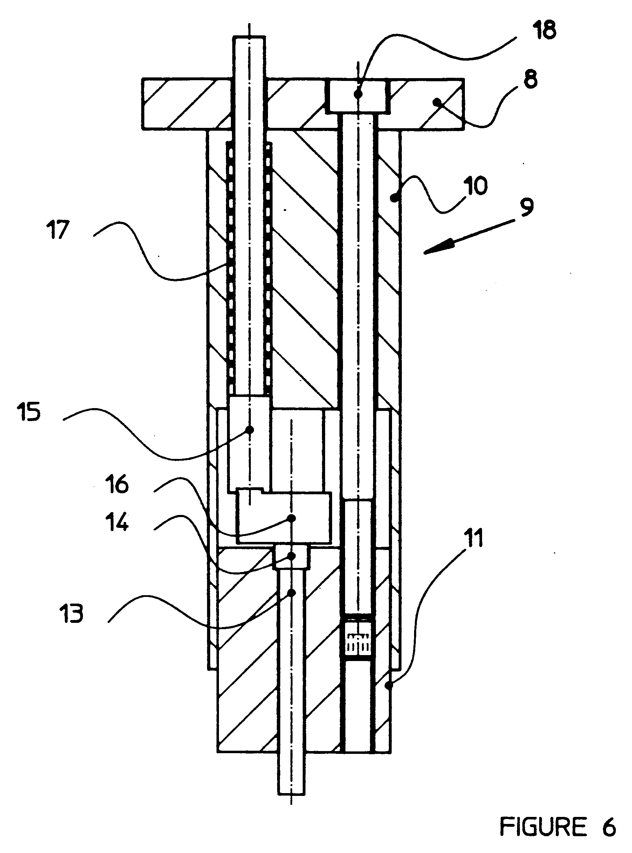

En face de chaque soupape, on trouve une douille 9 constituée d'une partie 10 fixe en hauteur par rapport à la culasse. Une partie mobile 11 coulisse à la manière d'un piston dans la partie inférieure de la douille 9. Cette partie mobile 11 est rendue solidaire en translation par des vis 18, d'une plaque supérieure 8. Pour introduire une culasse dans la machine, on déplace vers le haut la plaque 8 ce qui dégage toutes les parties mobiles 11 de la culasse. Le rappel vers le bas, donc en position de mesure des parties mobiles 11, est assuré par les ressorts 17 visibles sur la figure 6.

La partie mobile 11 porte, de façon coulissante, 4 palpeurs :
- 1 palpeur 12 prend appui sur la face extrême 2 de la queue de soupape 1.
- 3 palpeurs 13 situés à 120° autour de la queue 1 de la soupape prennent appui sur la face supérieure des deux demi-cônes 3 et 4. Le diamètre de ces palpeurs est supérieur au jeu possible entre les deux demi-cônes.

Ces quatre points A, B, C, D, qui forment respectivement les trois sommets d'un triangle équilatéral, et son centre, sont ramenés par des poussoirs 15 sur quatre points A', B', C', D', en ligne sur la partie supérieure du dispositif.

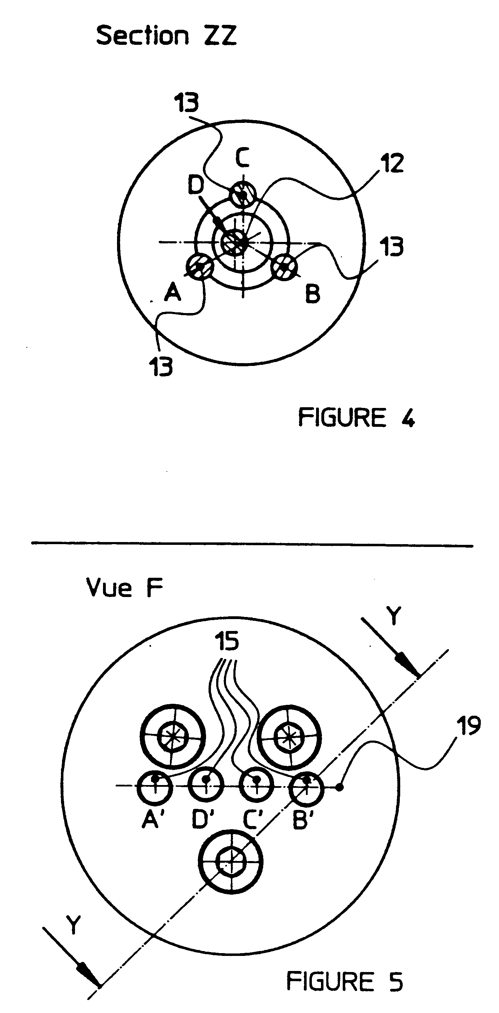

On voit bien sur la figure 4 qui est une section ZZ de la figure 3 la position du palpeur 12 et des trois palpeurs 13.

La figure 5 qui est une vue suivant F de la figure 3 montre la position alignée des quatre poussoirs 15.

La figure 6 est une coupe YY de la figure 5.

L'axe du palpeur 12 et des trois palpeurs 13, et l'axe des poussoirs 15 correspondants n'étant pas alignés, chaque poussoir 15 est muni d'un talon 16 qui vient prendre appui sur la tête 14 de chaque palpeur 12 et 13.

Des ressorts 17 logés dans la partie fixe 10 de la douille 9 repoussent les talons 16 de poussoirs 15 qui eux-mêmes sont en appui sur les têtes 14 des palpeurs 12 et 13. Ces palpeurs sont ainsi mis en contact avec la queue de soupape 1 et avec les demi-cônes 2 et 3.

Ainsi, la hauteur des points A', B', C', D', recopie fidèlement la hauteur des points A, B, C, D. La douille 9 étant fixe sur la machine, les quatre points A', B', C', D', sont placés sur une ligne contenue dans un plan passant par l'axe des soupapes et à une hauteur constante desdites soupapes.

La mesure de hauteur est assurée par un capteur à triangulation optique qui, en se déplaçant au-dessus de la ligne 19 des poussoirs 15, mesure successivement ces hauteurs pour chaque ligne de soupape.

Pour une soupape donnée, les quatre mesures $(A_1, A_2, A_3, A_4)$ permettent de calculer les trois différences $A_1-A_2$, $A_3-A_2$, et $A_4-A_2$, ($A_2$ étant la mesure effectuée sur la face extrême 2 de la queue de la soupape 1 et $A_1$, $A_3$, $A_4$ étant les mesures effectuées sur les demi-cônes 3 et 4) et de les comparer aux seuils mini et maxi. On peut écrire :

$$\text{mini} < A_1 - A_2 < \text{maxi}$$
$$\text{mini} < A_3 - A_2 < \text{maxi}$$
$$\text{mini} < A_4 - A_2 < \text{maxi}$$

$$\text{valeur absolue de } A_1 - A_3 < t$$
$$\text{''} \qquad \text{''} \qquad A_3 - A_4 < t$$
$$\text{''} \qquad \text{''} \qquad A_4 - A_1 < t$$

"t" étant la tolérance de perpendicularité du plan formé par l'extrémité des deux demi-cônes 3 et 4 par rapport à l'axe de la soupape 1.

Il est alors aisé d'en déduire si les demi-cônes sont correctement montés.

## Revendications

1. Procédé de contrôle du montage des demi-cônes des queues de soupapes d'un moteur à explosion, caractérisé en ce que l'on effectue à l'aide de palpeurs quatre mesures de hauteur différentielles $(A_1)$, $(A_2)$, $(A_3)$, $(A_4)$ entre trois points (A), (B), (C) situés sur les demi-cônes (3) et (4), répartis à 120° autour de la queue de la soupape (1) et un point D situé sur la face extrême (2) de la queue de la soupape (1), et que l'on relève sur quatre points A', B', C', D' placés sur une ligne contenue dans un plan passant par l'axe de la soupape, permettant de calculer les trois différences de hauteur $(A_1 - A_2)$, $(A_3 - A_2)$ et $(A_4 - A_2)$, ainsi que les valeurs absolues de $(A_1 - A_3)$, de $(A_3 - A_4)$, et de $(A_4 - A_1)$ qui doivent être inférieures à une valeur "t" qui est la tolérance de perpendicularité du plan formé par l'extrémité des deux demi-cônes (3) et (4), par rapport à l'axe de la soupape (1) et d'en déduire le montage correct desdits demi-cônes (3) et (4).

2. Procédé de contrôle suivant la revendication 1, caractérisé en ce que la mesure se fait à l'aide d'un capteur à triangulation optique solidaire d'un support animé d'un mouvement linéaire permettant de déplacer la tête optique au dessus des points A', B', C', D' et à une hauteur constante desdites soupapes.

3. Dispositif pour mettre en oeuvre le procédé selon les revendications 1 et 2, caractérisé en ce qu'il comporte une douille constituée d'une partie fixe (10) et d'une partie mobile (11) coulissant à la manière d'un piston dans la partie inférieure de la douille (9) et portant:
   - trois palpeurs (13) qui prennent appui en trois points situés à 120° sur les demi-cônes (3) et (4) et autour de la queue de soupape (1),
- un palpeur (12) qui prend appui sur la face extrême (2) de la queue de la soupape (1),
et que ces quatre palpeurs sont prolongés par quatre poussoirs (15) munis à leur partie inférieure d'un talon (16) qui prend appui sur la tête (14) de chaque palpeur (12) et (13) correspondant de sorte que les poussoirs (15) sont disposés sur une même ligne à la partie supérieure du dispositif et que cette ligne est contenue dans un plan contenant l'axe de la soupape (1).

4. Dispositif selon la revendication 3, caractérisé en ce que chaque ensemble constitué d'un poussoir et d'un palpeur est amené en contact avec la zône de la pièce à mesurer par un ressort (17).

5. Dispositif selon les revendications 3 et 4, caractérisé en ce que le diamètre des palpeurs (13) est supérieur au jeu de séparation des demi-cônes (3) et (4) lorsque ceux-ci sont montés autour de la queue de soupape (1).

6. Dispositif selon les revendications 3 et 4, caractérisé en ce que la partie mobile (11) de chacune des douilles (9) est solidaire d'une plaque (8) qui peut ainsi dégager ensemble tous les palpeurs (12) et (13) et permettre ainsi d'engager une culasse sous le montage.


**Patentansprüche**

1. Verfahren zur Kontrolle der Montage von Halbkegeln auf Ventilschäften eines Explosionsmotors, dadurch gekennzeichnet, daß mit Hilfe von Fühlern vier differentielle Höhenmessungen ($A_1$, $A_2$, $A_3$, $A_4$) ausgeführt werden zwischen drei Stellen (A, B, und C), die auf den Halbkegeln (3 und 4) um 120° versetzt um den Ventilschaft (1) herum verteilt sind und einer Stelle D, die auf der äußersten Fläche (2) des Ventilschaftes (1) liegt, und daß die Ergebnisse von vier Stellen (A', B', C', D'), die auf einer Linie liegen, die in einer Ebene enthalten ist, die die Achse des Ventils schneidet, die Berechnung der drei Höhendifferenzen ($A_1$-$A_2$, $A_3$-$A_2$ und $A_4$-$A_2$) ermöglicht, sowie der Absolutwerte von ($A_1$-$A_3$, von $A_3$-$A_4$ und von $A_4$-$A_1$), welche kleiner sein müssen als ein Wert "t", der die Toleranz der Senkrechten in der Ebene darstellt, die durch das Ende der zwei Halbkegel (3 und 4) gebildet sind bezüglich der Achse des Ventils (1), um daraus die korrekte Montage der Halbkegel (3 und 4) abzuleiten.

2. Verfahren zur Kontrolle nach Anspruch 1, dadurch gekennzeichnet, daß die Messung mit Hilfe eines optischen Triangulations-Fühlers erfolgt, der fest mit einer Halterung verbunden ist, welche eine lineare Bewegung ausführt, die es dem optischen Kopf ermöglicht, oberhalb der Stellen (A', B', C', D') und in konstanter Höhe zu den Ventilen sich zu verschieben.

3. Vorrichtung zur Durchführung des Verfahrens nach Ansprüchen 1 und 2, dadurch gekennzeichnet, daß sie eine Buchse aufweist, die aus einem feststehenden Abschnitt (10) und einem beweglichen Abschnitt (11) besteht, welcher wie ein Kolben im unteren Teil der Buchse (9) gleitet und aufweist:
- drei Fühler (13), die sich an drei Stellen abstützen, welche um 120° entlang der Halbkegel (3) und um den Ventilschaft (1) herum verteilt sind,
- einen Fühler (12), der sich auf der äußersten Fläche (2) des Ventilschaftes (1) abstützt und daß diese vier Fühler durch vier Stößel (15) verlängert sind, die an ihrem unteren Abschnitt einen Absatz (16) aufweisen, der sich auf dem Kopfteil (14) der zugehörigen Fühler (12 und 13) abstützt, derart, daß die Stößel (15) entlang derselben Linie im oberen Abschnitt der Vorrichtung angeordnet sind und daß diese Linie in einer Ebene enthalten ist, welche die Ebene des Ventils (1) enthält.

4. Vorrichtung nach Anspruch 3, dadurch gekennzeichnet, daß jede Anordnung, bestehend aus einem Stößel und einem Fühler, aufgrund einer Feder (17) die Stelle des zu messenden Teils berührt.

5. Vorrichtung nach Ansprüchen 3 und 4, dadurch gekennzeichnet, daß der Durchmesser der Fühler (13) größer ist als das Spiel, welches die beiden Halbkegel (3 und 4) trennt, wenn diese am Ventilschaft (1) montiert sind.

6. Vorrichtung nach Ansprüchen 3 und 4, dadurch gekennzeichnet, daß der bewegliche Abschnitt (11) einer jeden Buchse (9) fest mit einer Platte (8) verbunden ist, welche die Gesamtheit der Fühler (12 und 13) lösen kann, um so das Einführen eines Zylinderkopfes während der Montage zu ermöglichen.

**Claims**

1. An inspection method for the assembly of the half-cones of the valve stems of an internal combustion engine, characterized in that four differential height measurements (A1, A2, A3, A4) are carried out, by means of sensors, between three points (A, B, C) located on the half-cones (3, 4) and distributed at 120° around the stem of the valve (1) and a point D located on the end surface (2) of the valve stem (1) and in that measurement takes place at four points A', B', C' and D' located on a line contained in a plane passing through the axis of the valve, making it possible to calculate the three height differences (A1 - A2, A3 - A2 and A4 - A2) and the absolute values of (A1 - A3, A3 - A4 and A4 - A1) which must be lower than a value (t) which is the perpendicularity tolerance of the plane formed by the end of the two half-cones (3, 4) with respect to the axis of the valve (1) and to deduce therefrom the correct assembly of the two half-cones (3, 4).

2. An inspection method as claimed in claim 1, characterized in that measurement is carried out using an optical triangulation sensor rigid with a support moved in a linear manner, making it possible to move the optical head above the points A', B', C' and D' and at a constant height from the valves.

3. A device for implementing the method as claimed in claims 1 and 2, characterized in that it comprises a sleeve formed by a fixed portion (10) and a moving portion (11) sliding in the manner of a piston in the lower portion of the sleeve (9) and bearing:
   - three sensors (13) which bear on three points disposed at 120° on the half-cones (3, 4) and about the valve stem (1),
   - one sensor (12) which bears on the end surface (2) of the valve stem (1),
   and in that these four sensors are prolonged by four thrust devices (15) whose lower portions are provided with a heel (16) which bears on the head (14) of each corresponding sensor (12, 13) such that the thrust devices are disposed along a same line in the upper portion of the device and in that this line is contained in a plane containing the axis of the valve (1).

4. A device as claimed in claim 3, characterized in that each assembly formed by a thrust device and a sensor is brought into contact with the zone of the component to be measured by a spring (17).

5. A device as claimed in claims 3 and 4, characterized in that the diameter of the sensors (13) is greater than the clearance separating the half-cones (3, 4) when these are mounted about the valve stem (1).

6. A device as claimed in claims 3 and 4, characterized in that the moving portion (11) of each of the sleeves (9) is rigid with a plate (8) which may thus release all the sensors (12, 13) together and make it possible to engage a cylinder head below the assembly.

FIGURE 1

FIGURE 2

FIGURE 3

Section ZZ

FIGURE 4

Vue F

FIGURE 5

FIGURE 6